# EUROPEAN PATENT APPLICATION

(11) **EP 2 179 898 A1**
(43) Date of publication of application: **28.04.2010**
(21) Application number: 09170463.5
(22) Date of filing: 16.09.2009
(51) Int. Cl.: B60R 21/015, B60R 22/48, B60N 2/00

(54) **Occupant detection sensor, buckle, and seatbelt device**

(30) Priority: 27.10.2008 JP 2008275079
(71) Applicant: Takata Corporation, Tokyo 107-8508 (JP)
(72) Inventor: Tanaka, Koji, Tokyo 107-8508 (JP); Koyanagi, Toshiro, Tokyo 107-8508 (JP); Ogawa, Hiroshi, Tokyo 107-8508 (JP)
(74) Representative: Heunemann, Dieter

(57) **Abstract**

An occupant detection sensor, for a buckle and a seatbelt device is capable of detecting an occupant who is seated on a vehicle seat even if the buckle is in contact with the occupant or covered with the clothing. The occupant detection sensor is installed in a buckle 1 of a seatbelt device, and includes a light emitting element 2 provided at a position (occupant side surface 11) opposite the occupant, a light receiving element 3 provided adjacent to the light emitting element 2, and a protection member 4 for protecting the light emitting element 2 and the light receiving element 3 from being in contact with an object (Fig. 1).

## Description

The present invention relates to an occupant detection sensor, a buckle, and a seatbelt device mounted on a seat of a vehicle such as an automobile, and more specifically, it relates to an occupant detection sensor, a buckle and a seatbelt device for detecting an occupant seated on the vehicle seat.

Generally, in a vehicle such as an automobile, a seatbelt device for constraining an occupant is mounted on a vehicle seat formed of a seat portion on which the occupant is seated, and a backrest on which a back of the occupant is held. The aforementioned seatbelt device includes a webbing for constraining the occupant, a retractor for retracting and withdrawing the webbing, a buckle positioned on a side surface of the seat portion, and a tongue disposed on the webbing. The webbing is used for constraining the occupant by engaging the tongue with the buckle.

The determination whether or not the occupant is seated on the vehicle seat is one of factors for controlling the safeguard such as the seatbelt device and the airbag device. As the aforementioned occupant detection sensor, the structure having the infrared sensor installed in the buckle has been already proposed (see JP-A-10-129418 (Patent Document 1) and JP-A-2000-219102 (Patent Document 2)).

In the occupant detection sensor as disclosed in Patent Documents 1 and 2, the infrared light receiving/emitting element is disposed on the surface of the buckle, which may be brought into contact with the occupant, or covered with the clothing of the occupant. In such a case, the path of the infrared light receiving/emitting element is disturbed. As a result, the infrared light emitting element may fail to irradiate the infrared light to the occupant, or the infrared light receiving element may fail to receive the reflecting infrared light. The occupant, thus cannot be detected.

Accordingly, the object of the present invention is to provide an occupant detection sensor, a buckle and a seatbelt device which are capable of detecting the occupant seated on the vehicle seat even if the buckle is brought into contact with the occupant, or covered with the clothing.

The present invention provides an occupant detection sensor installed in a buckle of a seatbelt device, and includes a light emitting element provided at a position opposite an occupant, a light receiving element provided adjacent to the light emitting element, and a protection member for protecting the light emitting element and the light receiving element from being contact with an object.

The present invention provides a buckle for the seatbelt device, which is disposed adjacent to the occupant. The buckle is provided with an occupant detection sensor which includes a light emitting element provided at a position opposite an occupant, a light receiving element provided adjacent to the light emitting element, and a protection member for protecting the light emitting element and the light receiving element from being contact with an object.

The present invention provides a seatbelt device which includes a webbing for constraining an occupant, a retractor for retracting and withdrawing the webbing, a buckle provided at a position adjacent to the occupant, and a tongue provided for the webbing, the seatbelt device constraining the occupant with the webbing by engaging the tongue with the buckle. The buckle is provided with an occupant detection sensor which includes a light emitting element provided at a position opposite an occupant, a light receiving element provided adjacent to the light emitting element, and a protection member for protecting the light emitting element and the light receiving element from being contact with an object

In the occupant detection sensor, the buckle, and the seatbelt device, preferably, the protection member is a member for setting a predetermined gap between the light emitting element and the light receiving element, and the occupant. The protection member may be one of a rib which stands around the light emitting element and the light receiving element, a wall surface of the buckle which stands around the light emitting element and the light receiving element, and a cover member which covers the light emitting element and the light receiving element. The irradiation window may be formed to a front of the rib or the wall surface. The protection member may be integrated with a casing of the buckle, and formed into a totally rounded shape.

In the occupant detection sensor, the buckle, and the seatbelt device according to the present invention, the protection member for protecting the light emitting element and the light receiving element from being in contact with the other object is provided. This makes it possible to irradiate the detection medium such as the infrared light to the occupant, and to further receive the reflecting light while preventing the light receiving/emitting path from being disturbed by the occupant in contact with the buckle or the clothing which covers the buckle.

The protection member is formed as the member for setting a predetermined gap between the light emitting element and the light receiving element, and the occupant so as to easily protect the light emitting element and the light receiving element from being in contact with the other object. The protection member may be formed as the rib, the wall surface of the buckle, the cover member or the like to easily set the predetermined gap between the light emitting element and the light receiving element, and the occupant. The protection member may be integrated with the buckle to be formed into a totally rounded shape for the purpose of making the protection member less noticeable from the aspect of design. This further makes it possible to reduce the discomfort felt by the occupant who is in contact with the buckle.

The present invention will be further illustrated with examples below referring to Figs. 1 to 6.

Fig. 1 is a view showing an occupant detection sensor according to a first example of the present invention, wherein Fig. 1(A) is a front view; and Fig. 1(B) is a sectional view taken along line B-B of Fig. 1(A);
Fig. 2 is a view representing a relationship between a gap g (mm) of the occupant detection sensor and a light receiving voltage e (V);
Fig. 3 is a view showing an occupant detection sensor according to a second example of the present invention, wherein Fig. 3(A) is a front view; and Fig. 3(B) is a sectional view taken along line B-B of Fig. 3(A);
Fig. 4 is a sectional view of an occupant detection sensor according to another example of the present invention, wherein Fig. 4(A) represents a third example; and Fig. 4(B) represents a fourth example;
Fig. 5 is a view showing the seatbelt device according to the present invention, wherein Fig. 5(A) shows the seatbelt device for the front seat; and Fig. 5(B) shows the seatbelt device for the rear seat; and
Fig. 6 is a view showing a seatbelt device mounted on a child seat, wherein Fig. 6(A) is a top view; Fig. 6(B) is a back view of a buckle; and Fig. 6(C) is a sectional view taken along line C-C of Fig. 6(B).

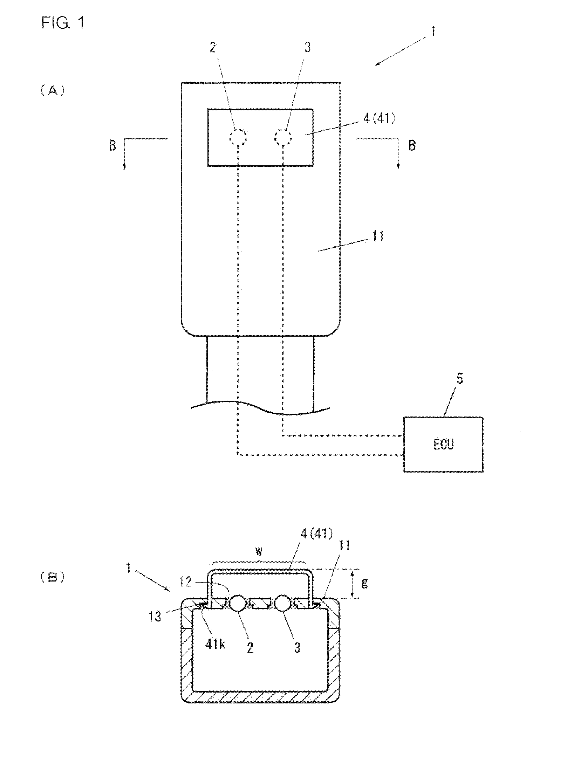

The occupant detection sensor according to the present invention is installed in a buckle 1 of a seatbelt device as shown in Figs. 1(A) and 1(B), and includes a light emitting element 2 at a position (occupant side surface 11) opposite the occupant, a light receiving element 3 disposed adjacent to the light emitting element 2, and a protection member 4 for protecting the light emitting element 2 and the light receiving element 3 from being in contact with an object. An internally disposed mechanism in the buckle 1 shown in Fig. 1 for attaching/detaching the tongue is omitted in the drawing.

The occupant detection sensor allows the light emitting element 2 to irradiate the detection medium such as infrared light and laser light, and the light receiving element 3 to receive the reflecting light to determine whether or not an object (for example, occupant, baggage and the like) exists on the vehicle seat. The buckle 1 is generally disposed on the side surface of the vehicle seat, and includes the occupant side surface 11 opposite the occupant who is seated on the vehicle seat. The light emitting element 2 and the light receiving element 3 are disposed on the occupant side surface 11 of the buckle 1 for detecting the object on the vehicle seat. The light emitting element 2 and the light receiving element 3 are disposed in an insertion hole 12 formed in the buckle 1 so as to be fixed with a mold resin and the like.

Referring to Fig. 1(A), the light emitting element 2 and the light receiving element 3 are electrically coupled with an on-board ECU (electronic control unit) 5. The light emitting element 2 emits the detection medium such as the infrared light based on the signal from the ECU 5. Upon reception of the reflecting light such as the infrared light, the light receiving element 3 performs the conversion into the voltage to transmit a light receiving signal to the ECU 5. When the voltage of the light receiving signal is equal to or larger than a predetermined value, the ECU 5 determines that the object exists in an irradiation range of the detection medium.

In the first example shown in Figs. 1(A) and 1(B), the protection member 4 is a cover member 41 formed of a totally transparent synthetic resin material. The cover member 41 is box-like shaped to have one surface opened, and a bottom shaped to form a predetermined gap g from the occupant side surface 11 of the buckle 1. A hook 41k is formed at each edge of the cover member 41 at the open side so as to be engaged with an engagement hole 13 formed in the buckle 1. The hooks 41k may be formed on at least one of opposite sides so as to be engaged with the buckle 1. Alternatively, they may be partially formed on the outer circumference of the edge. The cover member 41 is engaged with the buckle 1, and is fixed by positioning the hook 41k using the part for inserting the engagement portion of the hook 41k into the mold resin and the buckle 1 such that the bottom of the cover member 41 and the surface of the buckle 1 are apart at the predetermined gap g. That is, the cover member 41 is the member for setting the predetermined gap g between the light emitting element 2 and the light receiving element 3, and the occupant. The bottom of the cover member 41 forms the surface opposite the light emitting element 2 and the light receiving element 3, and accordingly forms an irradiation window w for irradiating the detection medium such as the infrared light. The cover member 41 is used for forming the space to the front of the light emitting element 2 and the light receiving element 3 with the predetermined gap g. It is not necessarily formed to have the box shape, but may have substantially the U-like cross section having one of the two opposite side surfaces opened.

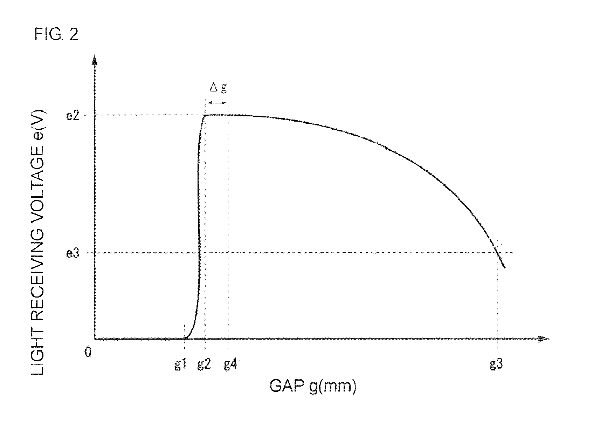

Fig. 2 represents the relationship between the gap g (mm) of the occupant detections sensor and the light receiving voltage e (V). In Fig. 2, the x-axis represents the gap g (mm), and the y-axis represents the light receiving voltage e (V). Elements capable of emitting and receiving the infrared light are employed as the light emitting element 2 and the light receiving element 3.

Fig. 2 shows the tendency of the occupant detection sensor using the infrared light that the light receiving voltage e rises up when the predetermined gap g1 is established, and reaches the maximum value of e2 when the gap becomes g2. Thereafter, the light receiving voltage e gradually decreases as the gap g is widened. The generally employed occupant detection sensor using the infrared light is designed to determine the existence of the object based on the light receiving voltage e equal to or larger than the threshold value e3 set as being equal to or half the maximum value e2 of the light receiving voltage e. The aforementioned threshold value e3 is set in accordance with the circuit structure of the occupant detection sensor, the detection range and the like. The gap g of the protection member 4 (cover member 41) may be set to be in the range from the gap g2 to the gap g3. However, if the gap g is made excessively large, the portion of the protection member 4, which protrudes from the occupant side surface 11 of the buckle 1 becomes too long, and the reception intensity of the reflecting infrared light irradiated from the irradiation window w of the protection member 4 (cover member 41) is lowered. It is therefore preferable to set the gap g of the protection member 4 (cover member 41) to be as close as the gap g2. Meanwhile, if the gap g of the protection member 4 (cover member 41) becomes smaller than the gap g2, the light receiving voltage e sharply drops. It is preferable to set a margin Δg in consideration of the manufacturing tolerance and the installation tolerance so as to set the gap of the protection member 4 (cover member 41) to the gap g4 as the value obtained by adding the margin Δg to the gap g2. The gap g4 is generally set in the range from 5 to 7 mm approximately.

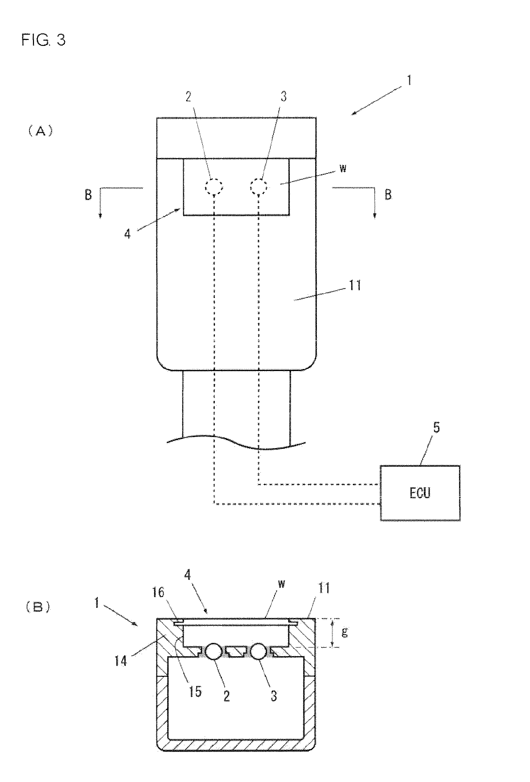

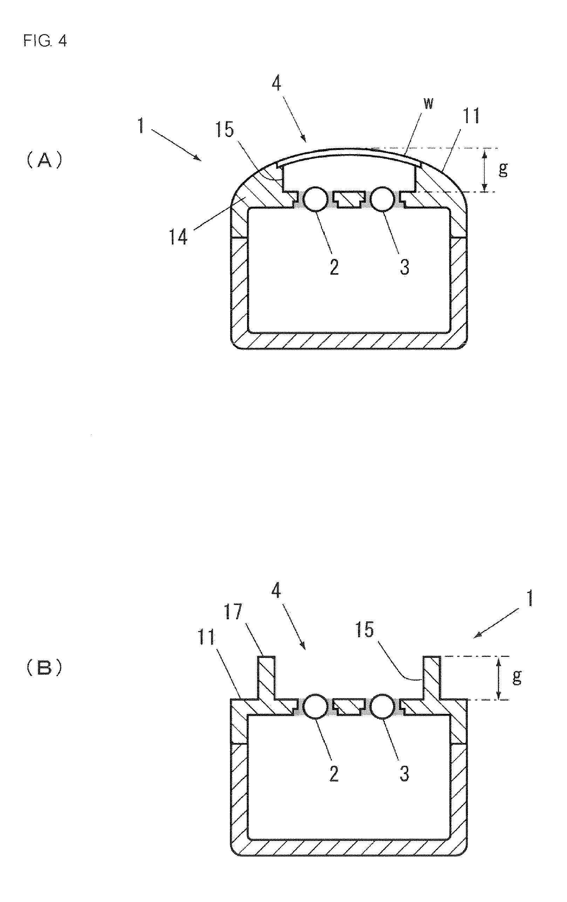

Another example of the occupant detection sensor according to the present invention will be described. Fig. 3 shows a second example of the occupant detection sensor according to the present invention. Fig. 3(A) is a front view. Fig. 3(B) is a sectional view taken along line B-B shown in Fig. 3(A). Fig. 4 is a sectional view showing the occupant detection sensor according to another example of the present invention. Fig. 4(A) shows a third example. Fig. 4(B) shows a fourth example. In the respective drawings, the same components as those for the occupant detection sensor of the first example shown in Fig. 1 are designated with the same reference numerals, and explanations thereof, thus will be omitted.

An occupant detection sensor according to the second example shown in Figs. 3(A) and 3(B) has the protection member 4 defined by a wall surface 14 of the buckle 1, which stands around the light emitting element 2 and the light receiving element 3, and the irradiation wall w disposed to the front of the wall surface 14. It is integrated with a casing of the buckle 1. Referring to Fig. 3(B), in the occupant detection sensor according to the second example, the casing of the buckle 1 is partially protruded toward the occupant such that the wall surface 14 stands around the light emitting element 2 and the light receiving element 3. A recess portion 15 having the gap g is defined by the wall surface 14 in the occupant side surface 11 of the buckle 1. In the second example, the irradiation wall w is formed to the front of the recess portion 15. The irradiation window w is a flat plate formed of the transparent synthetic resin material. The irradiation window w disposed to the front of the occupant side surface 11 prevents a portion of the clothing from being caught in the recess portion 15. Referring to Fig. 3(A), the buckle 1 is divided into an upper member 1a and a lower member 1b. A slit 16 is formed in the lower member 1b at the opening side. The buckle 1 with the aforementioned occupant detection sensor is formed by fixing the light emitting element 2 and the light receiving element 3 to the lower member 1b of the buckle 1, inserting the irradiation window w in the slit 16, and then bonding the upper member 1a to the lower member 1b through the screw or deposition. Unlike the cover member 41 of the first example, the structure of the second example has no protruding portion, which is excellent in design and reduces the discomfort to be felt by the occupant.

Basically an occupant detection sensor according to a third example shown in Fig. 4(A) has substantially the same structure as that of the second example shown in Fig. 3 except that the protection member 4 is formed into a totally rounded shape. Specifically, the occupant side surface 11 of the buckle 1 defined by the wall surface 14 of the buckle 1 and the irradiation window w is integrally formed into the totally rounded shape. The occupant side surface 11 of the buckle 1 which is likely to be in contact with the occupant is curved to provide the buckle 1 with the excellent design which reduces the discomfort felt by the occupant. Likewise the second example, the irradiation window w may be inserted into the slit so as to be fixed therein. Alternatively, it may be fixed using the adhesive agent, welding and the like.

An occupant detection sensor according to a fourth example as shown in Fig. 4(B), the protection member 4 is formed as a rib 17 which stands around the light emitting element 2 and the light receiving element 3. No irradiation window w is provided. The rib 17 is formed to protrude from the occupant side surface 11 of the buckle 1 which is likely to be in contact with the occupant. The rib 17 may be designed to stand for surrounding the light emitting element 2 and the light receiving element 3 entirely or partially. Alternatively, it may be designed to stand on a pair of opposite surfaces. The protection member with no irradiation window w is capable of keeping the predetermined gap g from the occupant so long as the clothing is not caught in the recess portion 15 defined by the ribs 17, thus providing the similar effects as those obtained in the other

### examples.

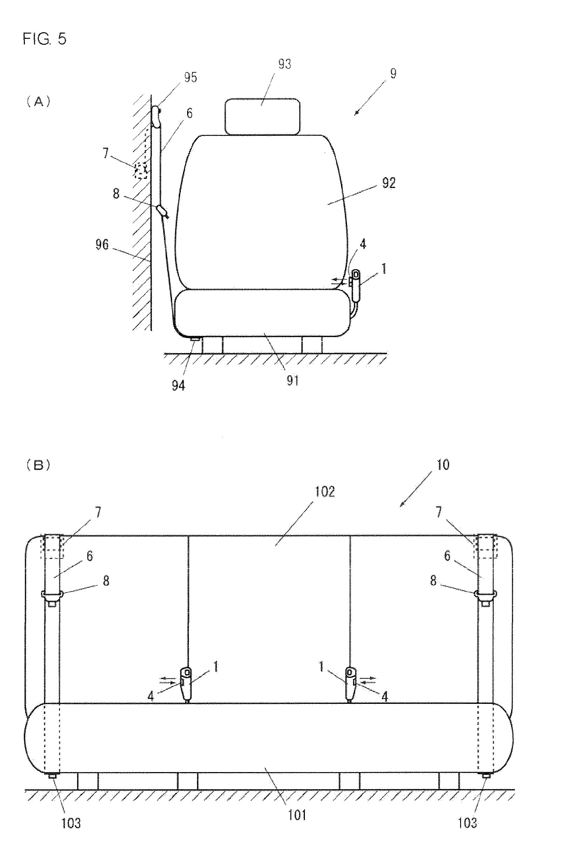

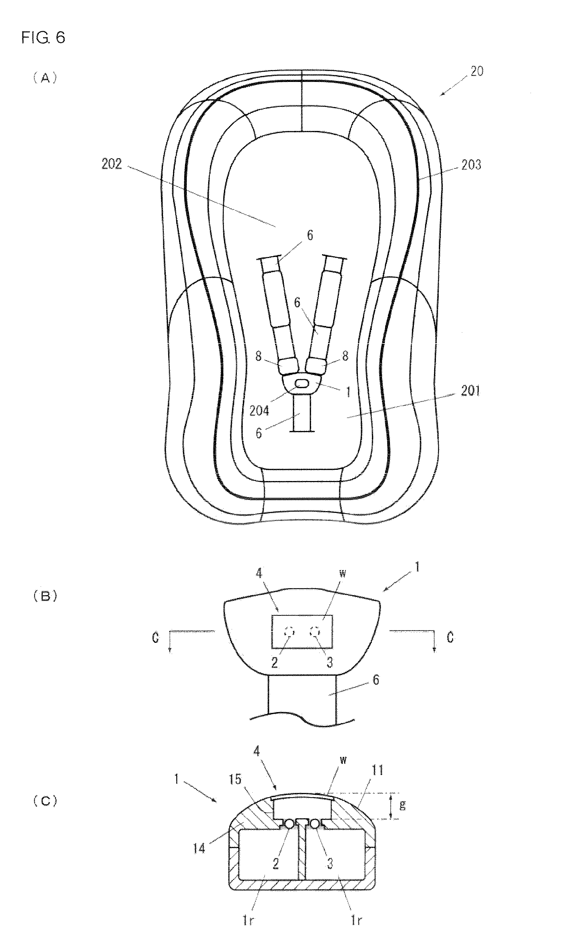

The seatbelt device provided with the occupant detection sensor will be described. Fig. 5 shows a seatbelt device according to the present invention. Fig. 5(A) shows the seatbelt device for the front seat. Fig. 5(B) shows the seatbelt device for the rear seat. Fig. 6 shows the seatbelt device mounted on the child seat. Fig. 6(A) is a top view. Fig. 6(B) is a back view of the buckle. Fig. 5(C) is a sectional view taken along line C-C shown in Fig. 6(B).

The seatbelt device shown in Figs. 5 and 6 includes a webbing 6 for constraining the occupant, a retractor 7 for retracting and withdrawing the webbing 6, the buckle 1 disposed at the position adjacent to the occupant, and a tongue 8 provided for the webbing 6. The seatbelt device is structured to constrain the occupant with the webbing 6 by engaging the tongue 8 with the buckle 1. The buckle 1 includes the light emitting element 2 disposed at the position opposite the occupant, the light receiving element 3 disposed adjacent to the light emitting element 2, the protection member 4 for protecting the light emitting element 2 and the light receiving element 3 from being in contact with the object. The seatbelt device shown in Figs. 5 and 6 is provided with the aforementioned occupant detection sensor and the buckle 1.

The seatbelt device shown in Fig. 5(A) has the buckle 1 with the occupant detection sensor according to the present invention, which is mounted on a front seat 9. A vehicle seat of the front seat 9 includes a seat portion 91 on which the occupant is seated, a backrest 92 on which the occupant's back is rested, and a headrest 93 for supporting the occupant's head. The webbing 6 has one end fixed to the lower portion of the seat portion 91, and the other end wound around a guide anchor 95 so as to be connected to the retractor 7. The guide anchor 95 is attached to a B-pillar 96 disposed at the window side of the vehicle, for example. In most of the case, the retractor 7 is built in the B-pillar 96 of the vehicle as shown in the drawing. However, it may be built in the backrest 92 of the vehicle seat. The webbing 6 is inserted into the tongue 8 between a belt anchor 94 and the guide anchor 95. When the tongue 8 is engaged with the buckle 1, the webbing 6 between the belt anchor 94 and the tongue 8 forms a lap belt portion for constraining the lower part of the occupant's body, and the webbing 6 between the guide anchor 95 and the tongue 8 forms a shoulder belt portion for constraining the occupant's shoulder. As the buckle 1 employed for the seatbelt device according to the present invention is provided with the occupant detection sensor having the protection member 4, the space with the gap g defined by the protection member 4 secures the light receiving/emitting path of the light emitting element 2 and the light receiving element 3 even if the buckle 1 is in contact with the occupant or covered with the clothing. This makes it possible to detect the occupant who is seated on the vehicle seat.

The seatbelt device shown in Fig. 5(B) has the buckles 1 each witch the occupant detection sensor according to the present invention, which are mounted on a rear seat 10. A vehicle seat of the rear seat 10 includes a seat portion 101 on which the occupant is seated, and a backrest 102 on which the occupant's back is rested. Each length of the seat portion 101 and the backrest 102 varies depending on the seat type such as two-occupant type and three-occupant type. The webbing 6 has one end fixed to the lower portion of the seat portion 101 by a belt anchor 103, and the other end wound around the backrest 102 so as to be connected to the retractor 7. In most of the case, the retractor 7 is disposed on the vehicle seat at the vehicle body side behind the backrest 102. The webbing 6 which is exposed on the surface of the backrest 102 is inserted into the tongue 8. As shown in the drawing, the buckles 1 are mounted on the seat portion 101 disposed at a predetermined interval. When the tongue 8 is engaged with the buckle 1, the webbing 6 between the belt anchor 103 and the tongue 8 forms the lap belt portion for constraining the lower part of the occupant's body, and the webbing 6 between the backrest 102 and the tongue 8 forms the shoulder belt portion for constraining the occupant's shoulder. As the buckle 1 employed for the seatbelt device according to the present invention is provided with the occupant detection sensor having the protection member 4, the space with the predetermined gap g may be formed between the light emitting element 2 and the light receiving element 3, and the occupant using the protection member 4. This makes it possible to secure the light emitting and the light receiving path of the light emitting element 2 and the light receiving element 3, and further to easily detect the occupant seated on the vehicle seat or the baggage placed on the seat portion 101 even if the buckle 1 is in contact with the occupant or covered with the clothing. As the protection member 4, the device as described in the first to the fourth examples may be employed.

The buckle 1 mounted on the front seat 9 or the rear seat 10 may be designed to stand or to be stored in response to opening or closing of the door. When the buckle of the aforementioned type stands, preferably, the occupant detection sensor as described above is located above the seat portions 91, 101 opposite the occupant, that is, near the leading end of the buckle 1. In most of the case, the seating sensor is built in the seat portions 91, 101 of the front seat 9 and the rear seat 10 for detecting the existence of the occupant based on the occupant's weight. The structure of the seating sensor is complicated as it is installed on the undersurface of the seat portions 91, 101, resulting in difficulty in installing the harness and the like. However, the occupant detection sensor installed in the buckle 1 no longer requires the seating sensor, thus solving the aforementioned problem.

A seatbelt device shown in Figs. 6(A) to 6(C) is formed by mounting the buckle 1 with the occupant detection sensor according to the present invention on a child seat 20. Referring to Fig. 6(A), the child seat 20 is formed of a base (not shown) with a standing portion which stands from the bottom plate on the seat portion of the vehicle seat, a seat portion 201 on which the hip part of the child is held, and a shell 203 with a backrest 202 for supporting the back of the child. The buckle 1 of the child seat 20 is connected to the leading end of the webbing 6 disposed below the seat portion 201 so as to allow two tongues 8, 8 to be engaged. The two webbings 6, 6 are exposed from the surface of the backrest 202, leading ends of which are connected to the tongues 8, 8, respectively. The webbings 6 are arranged to form substantially a Y-like shape by engaging the tongues 8,8 with the buckle 1 to constrain the child's body part between the legs, and right/left shoulders. A release button 204 is formed on the buckle 1 shown in Fig. 6(A) for releasing the tongues 8, 8. The webbings 6, 6 for constraining the shoulders may be joined inside the backrest 202 to be bound into one, and the end may be connected to a retractor for retracting the webbings 6, 6.

Referring to Fig. 6(B), the protection member 4 of the occupant detection sensor is disposed on the back surface of the buckle 1 (the surface in contact with the child body) of the above-structured child seat 20. Specifically, as shown in Fig. 6(C), the protection member 4 is defined by the wall surface 14 of the buckle 1, which stands around the circumferences of the light emitting element 2 and the light receiving element 3, and the irradiation window w formed to the front of the wall surface 14 so as to be integrated with the casing of the buckle 1. The recess portion 15 with the gap g is defined by the wall surface 14 on the back surface of the buckle 1. The irradiation window w is disposed to the front of the recess portion 15. In the case where the present invention is applied to the child seat 20, the back surface of the buckle 1 is brought into contact with the abdominal part of the child as the occupant. It is therefore preferable to provide the irradiation window w so as not to allow the clothing or the like to be caught in the recess portion 15. As it is directly in contact with the child, it is preferable to form the protection member 4 into the totally rounded shape. The aforementioned structure of the protection member 4 is basically similar to the one in the third example shown in Fig. 4(A). Insertion portions 1r, 1r as two separate parts are formed inside the buckle 1, with which the two tongues 8, 8 are engaged. As the buckle 1 for the seatbelt device of the child seat 20 employs the occupant detection sensor with the protection member 4, the protection member 4 forms the space with the predetermined gap g between the light emitting element 2 and the light receiving element 3, and the occupant even if the buckle 1 is in contact with the child or covered with the clothing. This may secure the light receiving/emitting path for the light emitting element 2 and the light receiving element 3, thus easily detecting the occupant (child) who sits on the child seat 20.

The present invention is not limited to the aforementioned examples, and may be applied to the two-point seatbelt device, and the four-point seatbelt device. The present invention may be changed into various forms so long as it does not deviate from the scope of the present invention.

## Claims

1. An occupant detection sensor installed in a buckle of a seatbelt device, comprising:
a light emitting element provided at a position opposite an occupant;
a light receiving element provided adjacent to the light emitting element; and
a protection member for protecting the light emitting element and the light receiving element from being in contact with an object.

2. The occupant detection sensor according to Claim 1, wherein the protection member is a member for setting a predetermined gap between the light emitting element and the light receiving element, and the occupant.

3. The occupant detection sensor according to Claim 1, wherein the protection member is one of a rib which stands around the light emitting element and the light receiving element, a wall surface of the buckle which stands around the light emitting element and the light receiving element, and a cover member which covers the light emitting element and the light receiving element.

4. The occupant detection sensor according to Claim 3, wherein an irradiation window is formed to a front of the rib or the wall surface.

5. The occupant detection sensor according to Claim 1, wherein the protection member is integrated with a casing of the buckle, and is formed into a totally rounded shape.

6. A buckle for a seatbelt device provided at a position adjacent to an occupant, wherein the buckle includes the occupant detection sensor according to any one of Claims 1 to 5.

7. A seatbelt device which includes a webbing for constraining an occupant, a retractor for retracting and withdrawing the webbing, a buckle provided at a position adjacent to the occupant, and a tongue provided for the webbing, the seatbelt device constraining the occupant with the webbing by engaging the tongue with the buckle, wherein the buckle includes the occupant detection sensor according to any one of Claims 1 to 5.
